# EUROPEAN PATENT SPECIFICATION

(11) **EP 3 364 708 B1**
(45) Date of publication and mention of the grant of the patent: **02.09.2020**
(21) Application number: 17156245.7
(22) Date of filing: 15.02.2017
(51) Int. Cl.: H04W 76/40, H04W 28/18

(54) **A SET OF MOBILE TERMINALS, MOBILE RADIO COMMUNICATION DEVICE, METHOD FOR PROVIDING GROUP INDICATION INFORMATION TO A COMMUNICATION NETWORK DEVICE AND METHOD FOR CONNECTING A SET OF MOBILE TERMINALS TO A COMMUNICATION NETWORK**
SATZ VON MOBILEN ENDGERÄTEN, MOBILFUNKKOMMUNIKATIONSVORRICHTUNG, VERFAHREN ZUR BEREITSTELLUNG VON GRUPPENINDIKATIONSINFORMATIONEN AN EINE KOMMUNIKATIONSNETZWERKVORRICHTUNG UND VERFAHREN ZUR VERBINDUNG EINES SATZES AN MOBILEN ENDGERÄTEN MIT EINEM KOMMUNIKATIONSNETZWERK
ENSEMBLE DE TERMINAUX MOBILES, DISPOSITIF DE RADIOCOMMUNICATION MOBILE, PROCÉDÉ PERMETTANT DE FOURNIR DES INFORMATIONS D'INDICATION DE GROUPE À UN DISPOSITIF DE RÉSEAU DE COMMUNICATION ET PROCÉDÉ DE CONNEXION D'UN ENSEMBLE DE TERMINAUX MOBILES À UN RÉSEAU DE COMMUNICATION

(43) Date of publication of application: 22.08.2018
(73) Proprietor: NTT DOCOMO, INC., Chiyoda-ku Tokyo 100-6150 (JP)
(72) Inventor: GUERZONI, Riccardo, 80687 Munich (DE); MUTIKAINEN, Jari, 80687 Munich (DE); KIESS, Wolfgang, 56218 Mülheim-Kärlich (DE); SAMA, Malla Reddy, 80687 Munich (DE)
(74) Representative: Viering, Jentschura & Partner mbB Patent- und Rechtsanwälte

(56) References cited:
- WO-A1-2015/020383
- US-A1- 2016 135 072

## Description

The present disclosure relates to sets of pluralities of mobile terminals, mobile radio communication devices, methods for providing group indication information to a communication network device and methods for connecting a set of mobile terminals to a communication network.

For 5G (Fifth Generation) communication systems, communication services are considered which require a low communication latency between the participating user devices. An example of such a service is referred to as Low Latency Communication (LLC) and may for example be used for a communication between vehicles. Since the required latencies may be as low as several milliseconds (e.g. 3ms) fulfilling the requirements of low latency is typically not a trivial task. Therefore, approaches which allow fulfilling the requirements of such services are desirable.

WO 2015/020383 discloses methods for starting and stopping device to device communications (D2D) in a mobile network under the assumption that the devices are all ProSe enabled (WO 2015/020383 , [0073]). These methods exploit the ProSe group formation which is a D2D process independent of the network functions. WO 2015/020383 enables "a method for relocating a UE from a network to a ProSe Group" and "a method for relocating a UE from a ProSe group to a network", under the condition that all the required configurations and operations are performed on the UE-side, therefore, D2D configurations and operations do not require any network configuration in accordance with WO 2015/020383. Another state-of-the art low-latency communication system is disclosed in US 2016135072.

The invention is defined by the appended claims. Dependent claims constitute embodiments of the invention. Any other subject matter outside the scope of protection of the claims is to be regarded as examples not in accordance with the invention.

According to one embodiment, a set of mobile terminals is provided comprising a first mobile terminal and a second mobile terminal, each mobile terminal comprising a processor and a memory, the processor configured to determine a group indication information at the application layer, wherein the group indication information indicates a group to which both, the first mobile terminal and the second mobile terminal are assigned and transmit the group indication information to a communication network device, which is a component of a core network of the communication network; signalling to the communication network device that the group is a group for a communication service having a low latency requirement by means of sending a low latency connectivity indicator to the communication network device; receiving the group indication information from the first mobile terminal and receiving the group indication information from the second mobile terminal; and performing a coordinated user plane configuration for the first mobile terminal and the second mobile terminal in response to the group indication information comprising selecting a common user plane gateway or two co-located user plane gateways or user plane gateways in different locations but connected via a low latency backbone for group connecting the first mobile terminal and the second mobile terminal.

According to a further embodiment, a communication network device, which is a component of a core network of the communication network, is provided comprising a receiver configured to receive a first group indication information from a first mobile terminal and to receive a second group indication information from a second mobile terminal, wherein the group indication information indicates a group to which both, the first mobile terminal and the second mobile terminal are assigned and a processor configured to perform a coordinated user plane configuration for the first mobile terminal and the second mobile terminal in response to the group indication information; selecting a common user plane gateway or two co-located user plane gateways or user plane gateways in different locations but connected via a low latency backbone for group connecting the first mobile terminal and the second mobile terminal depending on a reception of a signalling that the group is a group for a communication service having a low latency requirement.

According to further embodiments a method for providing group indication information to a communication network device and a method for connecting a set of mobile terminals to a communication network device, which is a component of a core network of the communication network, according to the set of mobile terminals and the communication network device as described above are provided.

Various embodiments provide a method for providing group indication information. The invention is defined by the appended claims.

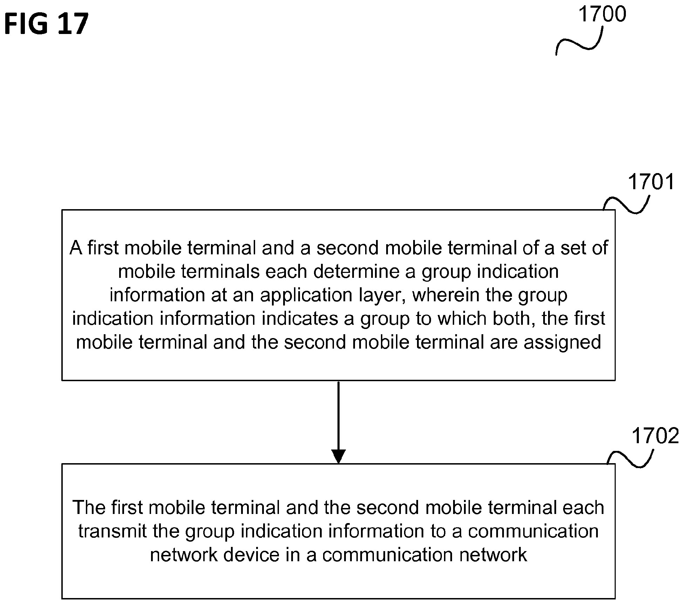

A method for providing group indication information to a communication network device, which is a component of a core network of the communication network, as illustrated in figure 17. The method comprising: a first mobile terminal (301) and a second mobile (304) terminal of a set of mobile terminals each determining a group indication information at the application layer, wherein the group indication information indicates a group to which both, the first mobile terminal and the second mobile terminal are assigned; and the first mobile terminal and the second mobile terminal each transmitting the group indication information to the communication network device in a communication network; signalling to the communication network device (1600) that the group is a group for a communication service having a low latency requirement by means of sending a low latency connectivity indicator to the communication network device; receiving the group indication information from the first mobile terminal and receiving the group indication information from the second mobile terminal; and performing a coordinated user plane configuration for the first mobile terminal and the second mobile terminal in response to the group indication information comprising selecting a common user plane gateway or two co-located user plane gateways or user plane gateways in different locations but connected via a low latency backbone for group connecting the first mobile terminal and the second mobile terminal. The method mentioned in this paragraph provides a first example.

By way of example, the low latency connectivity indicator may be a true/false indicator or indicates a maximum acceptable latency. The features mentioned in this paragraph in combination with the first example provide a second example.

By way of example, the method may further include transmitting the group indication information by means of a control plane message, e.g. a non-access stratum message. The features mentioned in this paragraph in combination with any one of the first or second examples provide a third example.

By way of example, the method may further include transmitting the group indication information by means of a connection request message or a connection update request message. The features mentioned in this paragraph in combination with any one of the first to third examples provide a fourth example.

By way of example, said determining of a group indication information at the application layer may be performed either by receiving the same group indication information in both terminals from a third entity like an application server or by negotiating a group indication information by an application layer interaction between said first and second terminal. The features mentioned in this paragraph in combination with any one of the first to fourth examples provide a fifth example.

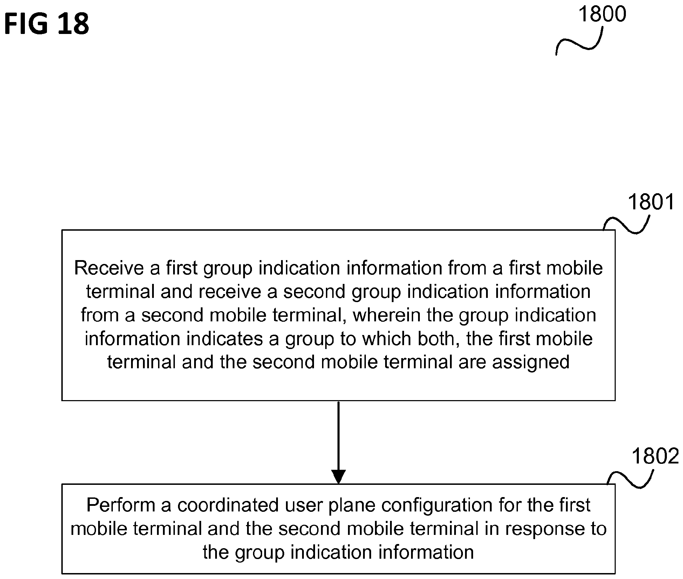

A method for connecting a set of mobile terminals to a communication network device, which is a component of a core network of the communication network as illustrated in figure 18. The method comprising the communication network device receiving a first group indication information from a first mobile terminal and receiving a second group indication information from a second mobile terminal, wherein said first and second group indication information indicate a group to which both, the first mobile terminal and the second mobile terminal are assigned; the communication network device performing a coordinated user plane configuration for the first mobile terminal and the second mobile terminal in response to the group indication information; selecting a common user plane gateway or two co-located user plane gateways or user plane gateways in different locations but connected via a low latency backbone for group connecting the first mobile terminal and the second mobile terminal depending on a reception of a signalling that the group is a group for a communication service having a low latency requirement. The method mentioned in this paragraph provides a sixth example.

By way of example, the method may further include selecting at least one user plane gateway in response to the group indication information for group connecting the first mobile terminal and the second mobile terminal. The features mentioned in this paragraph in combination with the sixth example provide a seventh example.

By way of example, the method may further include selecting, based on the group indication information, a common user plane gateway or two co-located user plane gateways or user plane gateways in different locations but connected via a low latency backbone for group connecting the first mobile terminal and the second mobile terminal. The features mentioned in this paragraph in combination with any one of the sixth or seventh examples provide an eighth example.

By way of example, the method may further include selecting a user plane gateway for group connecting the first mobile terminal and the second mobile terminal and maintaining an association of the group indication information with information about the user plane gateway. The features mentioned in this paragraph in combination with any one of the sixth to eighth examples provide a ninth example.

By way of example, the method may further include selecting a user plane gateway for group connecting the first mobile terminal and the second mobile terminal and transmitting information about the user plane gateway to the first mobile terminal and to the second mobile terminal. The features mentioned in this paragraph in combination with any one of the sixth to ninth examples provide a tenth example.

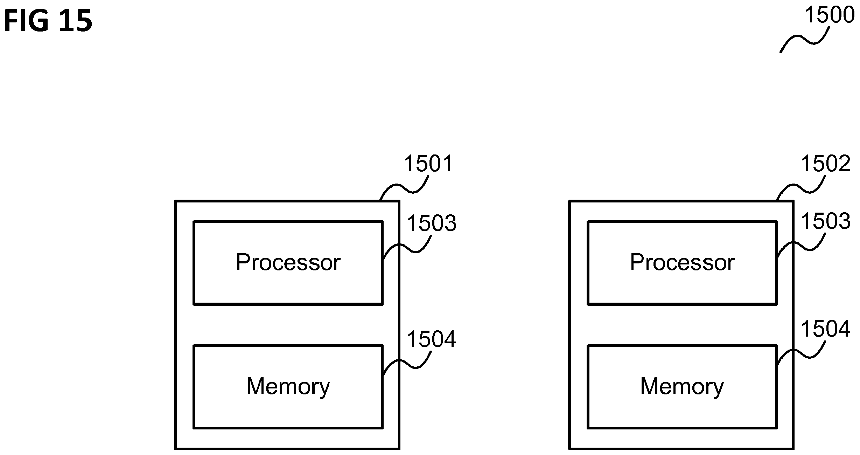

A set of mobile terminals as described with reference to figure 15 is provided. The set of mobile terminals comprising a first mobile terminal and a second mobile terminal, each mobile terminal comprising: a processor and a memory, the processor configured to determine a group indication information at the application layer, wherein the group indication information indicates a group to which both, the first mobile terminal and the second mobile terminal are assigned; and transmit the group indication information to a communication network device, which is a component of a core network of the communication network; signalling to the communication network device (1600) that the group is a group for a communication service having a low latency requirement by means of sending a low latency connectivity indicator to the communication network device; receiving the group indication information from the first mobile terminal and receiving the group indication information from the second mobile terminal; and performing a coordinated user plane configuration for the first mobile terminal and the second mobile terminal in response to the group indication information comprising selecting a common user plane gateway or two co-located user plane gateways or user plane gateways in different locations but connected via a low latency backbone for group connecting the first mobile terminal and the second mobile terminal. The set of mobile terminals mentioned in this paragraph provides an eleventh example.

By way of example, the low latency connectivity indicator may be a true/false indicator or indicates a maximum acceptable latency. The features mentioned in this paragraph in combination with the eleventh example provide a twelfth example.

By way of example, the processor may be configured to transmit the group indication information by means of a control plane message, e.g. a non-access stratum message. The features mentioned in this paragraph in combination with any one of the eleventh or twelfth examples provide a thirteenth example.

By way of example, the processor may be configured to transmit the group indication information by means of a connection request message or a connection update request message. The features mentioned in this paragraph in combination with any one of the eleventh to thirteenth examples provide a fourteenth example.

By way of example, the processor may be configured to determine the group indication information at the application layer either by receiving the same group indication information from a third entity like an application server or by negotiating a group indication information by an application layer interaction between said first and second terminal. The features mentioned in this paragraph in combination with any one of the eleventh to fourteenth examples provide a fifteenth example.

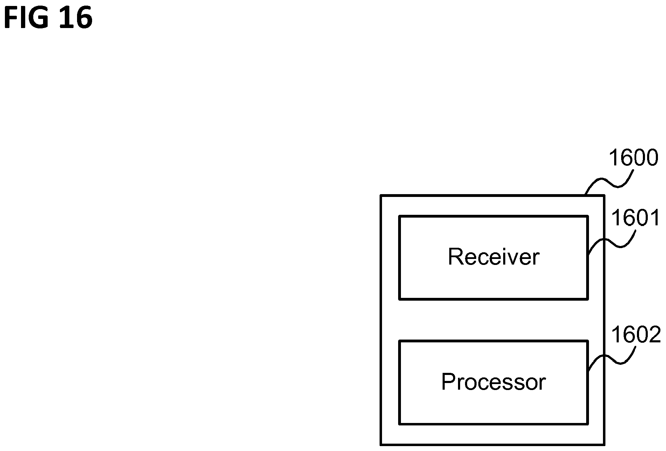

A communication network device, which is a component of a core network of the communication network, as may be described with reference to figure 16 is provided. The communication network device comprising: a receiver configured to receive a first group indication information from a first mobile terminal and to receive a second group indication information from a second mobile terminal, wherein the group indication information indicates a group to which both, the first mobile terminal and the second mobile terminal are assigned; and a processor configured to perform a coordinated user plane configuration for the first mobile terminal and the second mobile terminal in response to the group indication information; selecting a common user plane gateway or two co-located user plane gateways or user plane gateways in different locations but connected via a low latency backbone for group connecting the first mobile terminal and the second mobile terminal depending on a reception of a signalling that the group is a group for a communication service having a low latency requirement. The communication network device mentioned in this paragraph provides a sixteenth example.

The processor may be configured to select at least one user plane gateway in response to the group indication information for group connecting the first mobile terminal and the second mobile terminal. The features mentioned in this paragraph in combination with the sixteenth example provide a seventeenth example.

The processor may be configured to select, based on the group indication information, a common user plane gateway or two co-located user plane gateways or user plane gateways in different locations but connected via a low latency backbone for group connecting the first mobile terminal and the second mobile terminal. The features mentioned in this paragraph in combination with any one of the sixteenth or seventeenth examples provide an eighteenth example.

By way of example, the processor may be configured to select a user plane gateway for group connecting the first mobile terminal and the second mobile terminal and to maintain an association of the group indication information with information about the user plane gateway. The features mentioned in this paragraph in combination with any one of the sixteenth to eighteenth examples provide a nineteenth example.

By way of example, the processor may be configured to select a user plane gateway for group connecting the first mobile terminal and the second mobile terminal and to transmit information about the user plane gateway to the first mobile terminal and to the second mobile terminal. The features mentioned in this paragraph in combination with any one of the sixteenth to nineteenth examples provide a twentieth example.

According to a further example, the communication network device is a device of a control plane of a communication network, e.g. a mobile radio communication network.

According to a further example, the communication network device is a control plane gateway.

According to a further example, the communication network device is a component of a core network of the communication network.

According to a further example, the processor is configured to signal to the communication network device that the group is a group for a communication service having a low latency requirement.

According to a further example, the group is a group according to a group communication service provided by the application server.

According to a further example, the group communication service is a group communication session.

According to a further example, the processor is configured to transmit the group indication information by means of a packet data network connectivity request or a packet data network connectivity update request.

According to a further example, the processor is configured to transmit the group indication information by means of a message indication a request for an allocation of a user plane gateway for the respective mobile terminal.

According to a further example, the processor is configured to receive information about a user plane gateway selected for the mobile terminal and to transmit the information about the user plane gateway to the application server.

According to a further example, the information about the user plane gateway includes at least one of an identification of the user plane gateway and a location identification of the user plane gateway.

According to a further example, the group indication information indicates a group of a communication service provided by the application server to which the application server has assigned the first mobile terminal and the second mobile terminal.

According to a further example, the communication service is a Low Latency Communication.

According to a further example, the processor is configured to perform a coordinated user plane configuration for the first mobile terminal and the second mobile terminal in response to the group indication information.

According to a further example, the signalling is a low latency connectivity indicator.

According to a further example, the information about the user plane gateway includes at least one of an identification of the user plane gateway and a location identification of the user plane gateway.

According to a further example, a mobile radio communication system is provided involving a control plane function and a multiplicity of user equipment, where a user equipment (UE) indicates via control plane signalling to the control plane function (CN CP) that it belongs to a group by sending a group identifier.

For example, the UE (or generally a mobile terminal) sends to the CN CP (or generally a communication network device) a Low Latency Connectivity (LLC) indicator.

The LLC indicator is for example a true/false indicator.

The LLC indicator for example indicates the maximum acceptable latency for the intended service.

The CN CP for example uses the group identifier as an input to select the gateway used for the communication between the UE and other UEs or the UE and the application layer.

The CN CP for example maintains an association between group identifiers and gateway identifiers.

The group identifier is for example provided by the application layer to the UE.

The UE for example sends multiple group identifiers and multiple LLC indicators.

The CN CP for example sends to the UE the location identifier of the gateway selected for the communication between the UE and the application layer.

The UE for example sends to the application layer the location identifier of the gateway selected for the communication between the UE and the application layer.

The application layer for example instantiates an application server in the location identified by the location identifier of the gateway.

It should be noted that the above examples may be combined in any way. Further, examples described in context of the set of mobile terminals are analogously valid for the communication network device, the mobile radio communication system and the methods and vice versa.

In the drawings, like reference characters generally refer to the same parts throughout the different views. The drawings are not necessarily to scale; emphasis instead generally being placed upon illustrating the principles of the invention. In the following description, various aspects are described with reference to the following drawings, in which:
Figure 1 shows a communication system.
Figure 2 illustrates an example for Low Latency Communication.
Figure 3 shows an example of a group of UEs being connected to a common user plane gateway (UP-GW).
Figure 4 shows an example of a group of UEs being connected to co-located user plane gateways (UP-GWs).
Figure 5 shows an example of a platoon of cars moving between two cities.
Figure 6 illustrates a device-to-device communication.
Figure 7 shows a message flow diagram according to an embodiment illustrating an example in which the exchange of information between application server and communication network is performed by UEs.
Figure 8 shows a message flow diagram showing another example for a message flow for an exchange of information between application server and communication network according to an embodiment.
Figure 9 shows a flow diagram illustrating an example for assigning a group identification (ID) to a UE in more detail.
Figure 10 shows a flow diagram illustrating an example for group ID provisioning in more detail.
Figure 11 shows a flow diagram illustrating a signalling of an ID group indicator to a communication network's control plane using a PDN connectivity request.
Figure 12 shows a flow diagram illustrating a signalling of an ID group indicator to a communication network's control plane using a PDN connectivity update.
Figure 13 shows a flow diagram illustrating a signalling of an ID group indicator to a communication network's control plane using a Core Network Control Plane (CN CP) triggered gateway relocation.
Figure 14 shows a flow diagram illustrating an example for the signalling a UE in a group performs a Tracking Area Update and in response the CN CP performs a GW selection that may trigger a relocation of the GW.
Figure 15 shows a set of mobile terminals according to an embodiment.
Figure 16 shows a communication network device according to an embodiment.
Figure 17 shows a flow diagram illustrating a method for providing group indication information to a communication network device according to an embodiment.
Figure 18 shows a flow diagram illustrating a method for connecting a set of mobile terminals to a communication network according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

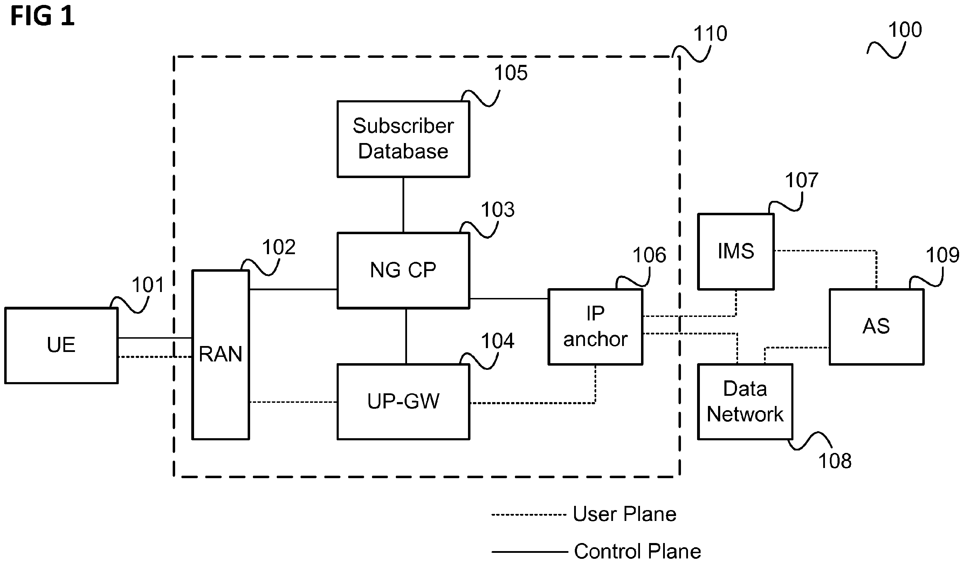

Figure 1 shows a communication system 100.

The communication system 100 comprises a UE 101 which is in the coverage area of a radio access network (RAN) 102. The RAN 102 comprises a plurality of base stations which each operate a radio cell according to a radio access technology (RAT).

The RAN 102 is connected to a Next Generation Control Plane (NG CP) 103, i.e. to entities and components (such as servers and gateways) implementing a NG CP, and to a User Plane Gateway (UP-GW) 104.

The communication system 100 for example comprises a Subscriber Database 105 to which the NG CP 103 is connected.

The communication system 100 further comprises an IP anchor 106 to which the NG CP 103 and the UP-GW 104 are connected.

The IP anchor 106 may for example be implemented by a NGC UP-GW and may provide a connection to an IMS 107 or a data network 108 and thus to an application server 109.

The RAN 102, the Subscriber Database 105, the NG CP 103, the UP-GW 104 and the IP anchor 106 for example belong to a mobile radio communication network 110.

New services foreseen in 5G (Fifth Generation mobile radio communication systems) require low latency communication (LLC) among groups of UEs (referred to as "group communication"). Examples are Vehicle to Vehicle (V2V) services, Vehicle to Infrastructure (V2I) services, and collaboration in 3D cyber-real offices. For instance, for vehicular applications like platooning or basic safety message the end-to-end latency requirement is 3ms. Such end-to-end latency can be expected to only be achieved by using common or co-located (user plane) gateways for UEs belonging to a communication group.

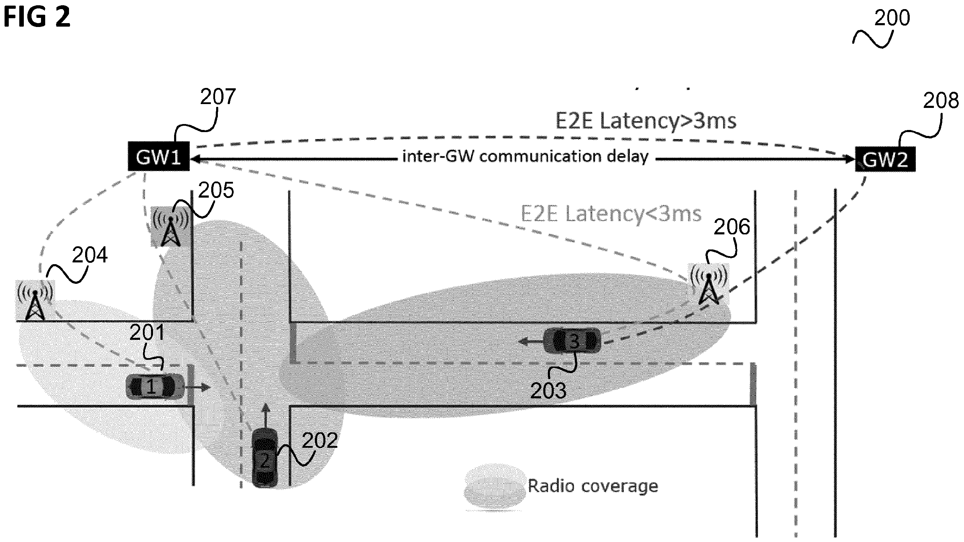

Figure 2 illustrates an example for LLC.

A first car 201 communicates with a first (user plane) gateway 207 via a first base station 204, a second car 202 communicates with the first gateway 207 via a second base station 205 and a third car 203 which may communicate with the first gateway 207 or a second (user plane) gateway 208 via a third base station 206.

However, in this example, only the selection of the first gateway 207 for the third car 203 (i.e. having the first gateway 207 serve the third car 203 for the communication, e.g. receiving and forwarding data sent by the third car 203 and transmitting data to the third car 203 sent by the other cars 201, 202) fulfils the E2E (end-to-end) latency requirement to communicate with the first car and the second car 202 since a communication via the second gateway 208 would, due to inter-gateway communication delay, lead to a latency of above 3ms.

Additionally, low latency communication scenarios may involve application servers communicating with a group of UEs. In this case, in addition to selecting a common gateway or co-located gateways for the UEs in the group, it is also necessary to locate the application server (AS) close to the selected gateway(s) to fulfil the LLC requirements. Thus, the application server and the mobile network can be seen to need to share the concept of "gateway location".

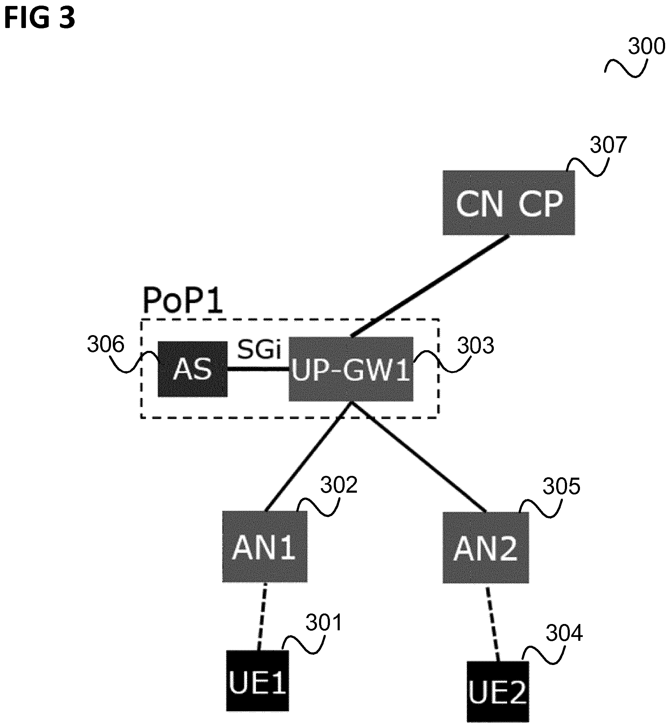

Figure 3 shows an example of a group of UEs being connected to a common user plane gateway (UP-GW).

A first UE 301 is connected via a first access node 302 (e.g. a base station) to an UP-GW 303 and a second UE 304 is connected via a second access node 305 (e.g. a base station) to the UP-GW 303.

An application server 306 is connected to the UP GW 303 and the UP GW 303 is connected to the core network control plane 307 (e.g. to a NG CP as described with reference to figure 1).

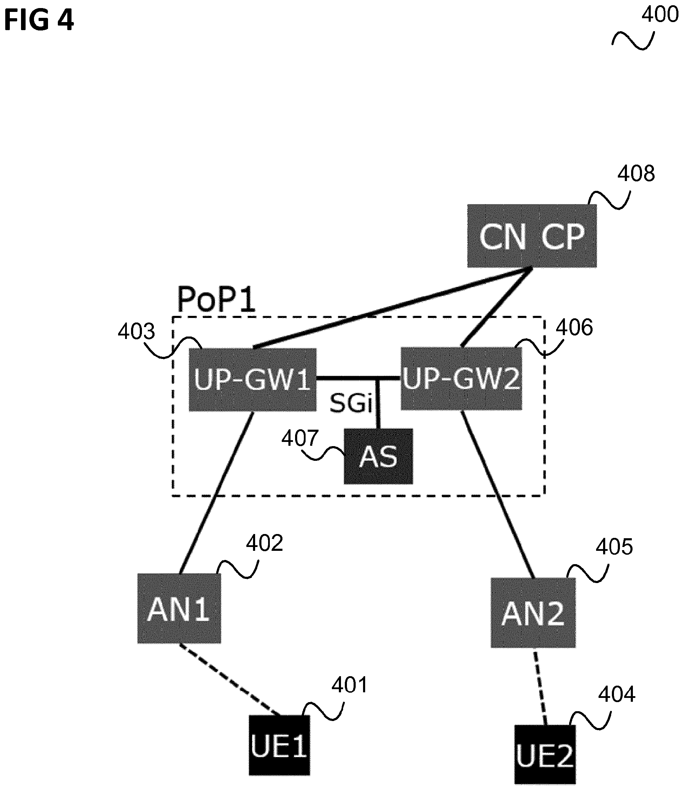

Figure 4 shows an example of a group of UEs being connected to co-located user plane gateways (UP-GWs).

A first UE 401 is connected via a first access node 402 (e.g. a base station) to a first UP-GW 403 and a second UE 404 is connected via a second access node 405 (e.g. a base station) to a second UP-GW 406.

An application server 407 is connected to the UP GWs 403, 406 and the UP GWs 403, 406 are connected to the core network control plane 408 (e.g. to a NG CP as described with reference to figure 1).

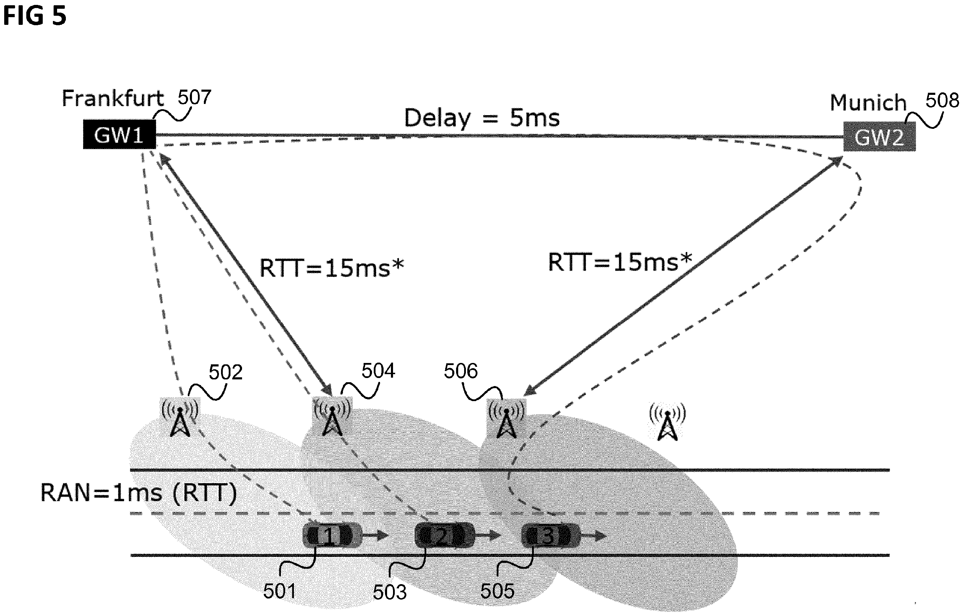

In case of less tight latency constraints, such as 20ms end-to-end with data rates in the order of 2.5Mbps up to 65Mbps the GW selection is less determinant. Still, grouping (and using a common gateway) can be an alternative to increasing the density of the gateways as explained by Figure 5.

Figure 5 shows an example of a platoon of cars moving between two cities.

A first car 501 communicates via a first base station 502 with a first (user plane) gateway 507, a second car 503 communicates via a second base station 504 with the first (user plane) gateway 507 and a third car 505 communicates via a third base station 506 with a second (user plane) gateway 508.

The first car 501 and the second car 503 communicate via the first gateway 507 with an E2E latency of 16ms. The third car 505 communicates via the second gateway 508 with an additional latency of 6ms, exceeding the 20ms target.

This issue can be addressed by deploying more gateways closer to each other. However, it may be preferable to address this issue by grouping (and using a common gateway) to reduce infrastructure costs.

According to 3GPP specifications also direct Device-to-Device communication is considered to realize LLC.

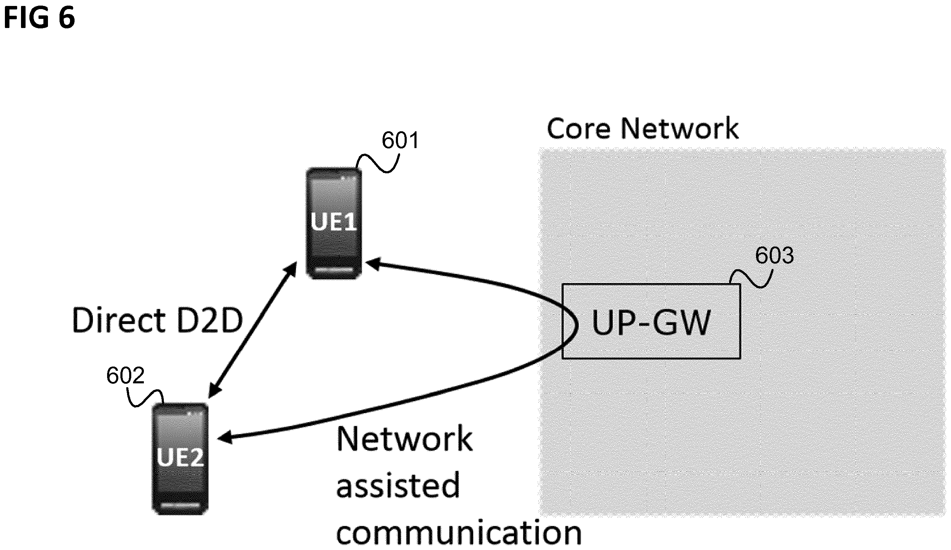

Figure 6 illustrates a device-to-device communication.

A first UE 601 and a second UE 602 may directly communicate according to D2D (bypassing the RAN).

D2D communication can be considered as first option for low latency communication. However, the level of data rate required for V2V applications might not be appropriate for D2D communication and assistance by the mobile radio communication network, i.e. a network assisted communication via an UP-GW 603, might be needed for applications involving high data rates which may again be based on grouping.

According to various embodiments, as described in the following, in order to support Low Latency Connectivity (LLC) services, the Core Network Control Plane (CN CP) coordinates the selection of a User Plane gateway (UP-GW) for devices (i.e. UEs) belonging to the same group, the group being defined at the application layer (e.g. by an application server).

For example, the CN CP selects the same UP-GW for all devices in a group or at least selects UP-GWs located in the same location or data centre or PoP (Point of Presence) or located in different locations but connected via a low latency backbone. This is also referred to 'group connect' the devices in the group.

In particular, approaches are described in the following how to carry a group indication from the application layer to the CN CP for UEs that need to perform group communication for LLC services.

It should be noted that the functionality ProSe (proximity-based services) in 3GPP introduces a specific function (ProSe Function) and interfaces (e.g. PC3 between ProSe-enabled UE and ProSe Function) in EPS (Evolved Packet System) to handle proximity detection and communication of devices in proximity. Group communication (one-to-many, broadcast) is limited to authorized ProSe-enabled Public Safety UEs. In ProSe the UEs belonging to a group are determined by the ProSe function (in the Core Network) using the Discovery procedure. The UE receives the "ProSe Layer-2 Group ID" from the ProSe function and uses it to filter out the received packet.

In contrast to the approaches described below the UE does not, according to ProSe, request the Core Network to belong to a group. Rather, groups are determined by the network and no application and low latency requirements are taken into consideration in context of ProSe.

Further, according of 3GPP a "Group message delivery procedure" is introduced. In this procedure an application server interacts with the CN CP via a Service Capability Exposure Function (SCEF) to request the delivery of a message to a group of devices. The group identifier (Temporary Mobile Group Identify) is allocated by a BM-SC (Broadcast Multicast - Service Centre).

In the group message delivery procedure, the application server (AS) requests the network to implement group communication within a set of UEs belonging to a group rather than the UE reporting a group identifier to the network.

Further, according to 3GPP, a GCS Application Server (Group Communication System AS) may use the enablers offered by the 3GPP system for providing a Group Communication Service (GCS). The GCS UEs register with their GCS AS using application signalling for participating in one or multiple GCS groups. The GCS-enabled UE interacts only with the GCS server (interface GC1) to participate in a group communication.

In GCS the UE does not request in the NAS signalling to belong to a group. Further, no low latency requirements are taken into consideration.

The "Group message delivery procedure" in 3GPP specifications for SCEF and GCS is only used for broadcast/multicast communication between an Application Server and a set of UEs:
- The UEs requests the AS to be associated to a group
- The AS notifies to the specific function in the core network (BM-SC, Broadcast Multicast - Service Centre) the list of UEs belonging to a group

In contrast, in the approaches described in the following, low latency requirements may be taken into consideration. Moreover, according to various embodiments, the mobile radio communication network does not need to implement specific functions to enable the group communication. The CN CP only implements coordinated gateway selection.

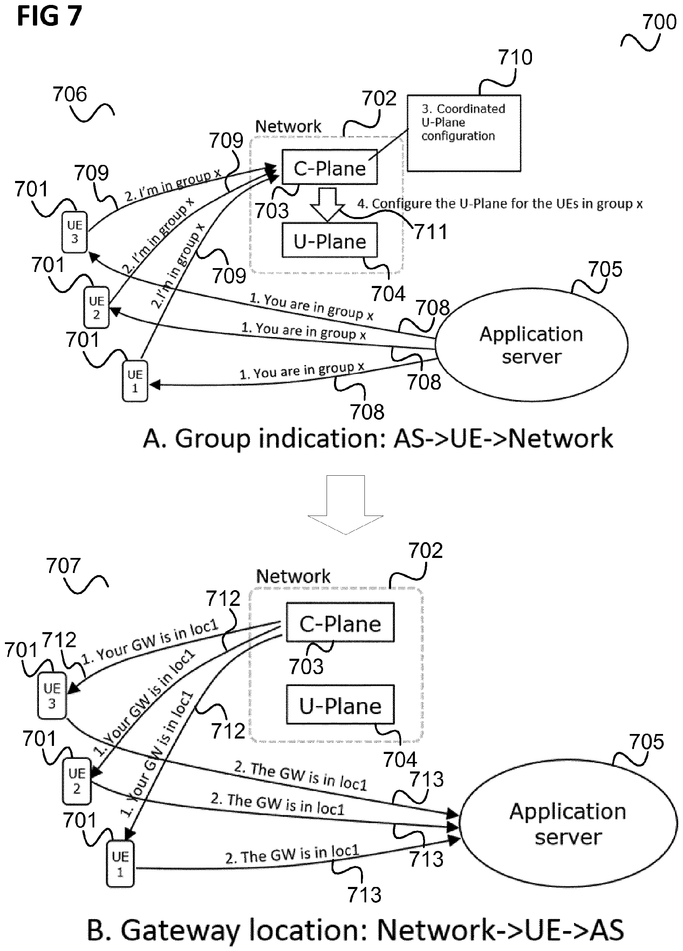

In the following, an approach in which the exchange of information between application layer (e.g. an application server) and communication network (e.g. mobile radio communication network but possibly also another type of communication network) is performed by the UEs is described with reference to figure 7.

Figure 7 shows a message flow diagram 700 according to an embodiment.

The message flow takes place between a plurality of UEs 701, a communication network 702 comprising a control plane 703 and a user plane 704 and an application server 705.

The message flow is separated into two stages wherein a first diagram 706 (stage A) illustrates the communication of a group indication from the application server 705 via the UEs 701 to the communication network and a second diagram 707 (stage B) illustrates the communication of the location of the gateway allocated for the UEs 701 via the UEs 701 to the application server 705.

In 708 (in the first diagram 706), the application server 705 sends an indication to the UEs 701 indicating that the UEs 701 are in a certain group.

In 709, each UE 701 sends a group indication (defined at the application level) in a NAS (Non-Access Stratum) message to the control plane 703 of the communication network 702.

In 710, the communication network 702 selects common or co-located GWs for the UEs 701 (based on them belonging to the same group) and, in 711, configures the user plane accordingly for the UEs 701 in the group.

The application server 705 may detect the GW location implicitly (from the IP address assigned to the UE) or explicitly.

For an explicit detection, the communication network 702 sends, in 712 (in the second diagram 707) a GW location indication to each UE 701 in a NAS message.

In 713, the UEs 701 forward the gateway location indication to the application server 705.

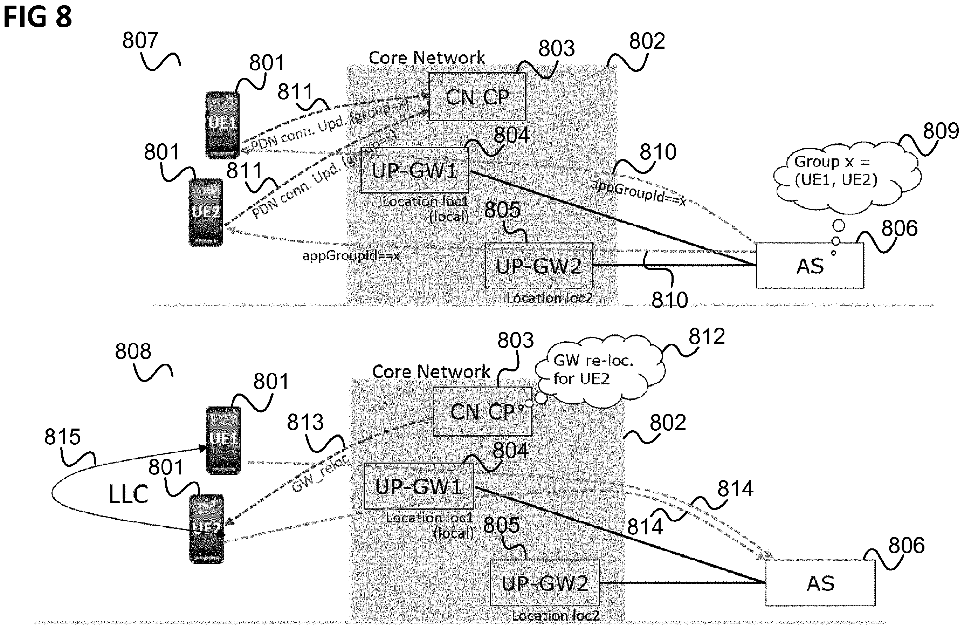

Figure 8 shows a message flow diagram 800 showing another example for a message flow for an exchange of information between application layer and communication network according to an embodiment.

Specifically, the message flow illustrates an exchange of group identifiers and gateway location identifiers between the communication network and application layer via the UEs to enable coordinated gateway selection for Low Latency Communication (LLC).

The message flow takes place between a plurality of UEs 801, a core network 802 of a communication network comprising a control plane component 803, a first user plane gateway 804, a second user plane gateway 805 and an application server 806.

Similarly, to figure 7, the message flow is separated into a first stage and a following second stage illustrated by a first diagram 807 and a second diagram 808, respectively.

The UEs 801 run an LLC-based application that require group communication. In 809 (first diagram 807), the application server assigns the UEs to a group with a unique group identifier x and, in 810, indicates the group identifier to the UEs via the first user plane gateway 804 and the second user plane gateway 805, respectively.

In 811, when requesting network connectivity for the LLC service, the UEs 801 indicate the group identifier (provided by the application layer) to the core network 802.

In 812 (second diagram 808), the core network 802 selects appropriate gateways for the UEs 801 in the group (e.g. a common User Plane Gateway (UP-GW) or UP-GWs in the same location).

Specifically, in this example, the core network decides to relocate the UP-GW that serves the UE 801 from the second UP-GW 805 to the first UP-GW 804 and performs corresponding signalling in 813.

In 814, the UEs 801 signal information about their allocated user plane gateways to the application server 806 and begin performing LLC in 815.

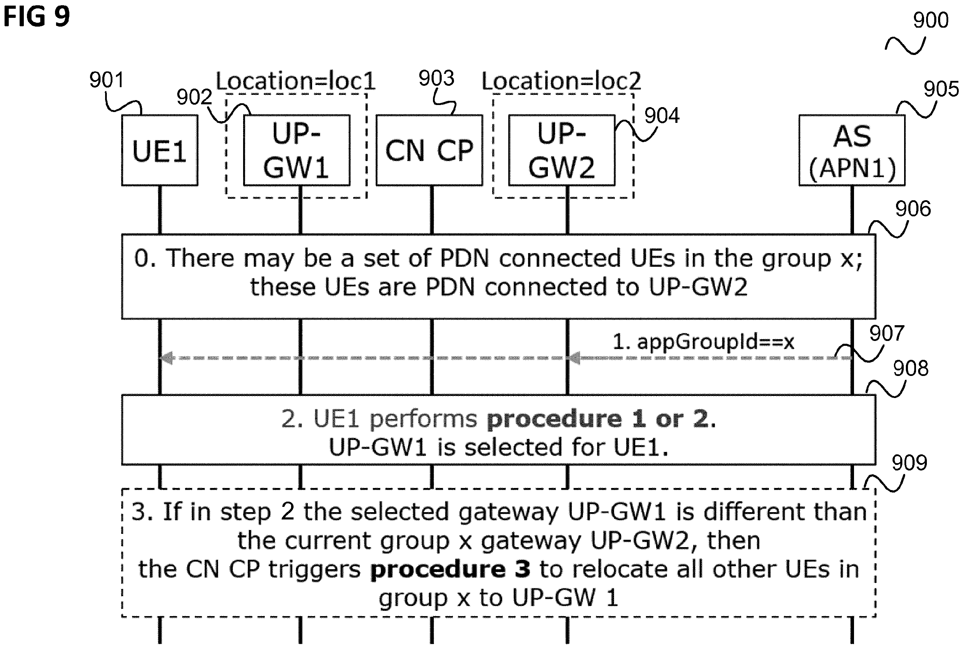

Figure 9 shows a flow diagram 900 illustrating an example for assigning a group identification (ID) to a UE in more detail.

The message flow takes place between a UE 901 (e.g. corresponding to one of the UEs 701), a first UP-GW 902 (at a first location, e.g. corresponding to the first UP-GW 804), a core network control plane component 903 of a mobile radio communication system (e.g. part of control plane 703), a second UP-GW 805 (at a second location, e.g. corresponding to the second UP-GW 805) and an application server 905 (e.g. corresponding to the application server 705).

It is assumed that in 906, there is a set of PDN (Packet Data Network) connected UEs in a group (with a group ID x) which are PDN connected to the second UP-GW 805.

In 907, in order to run an application, the UE 901 is made aware that it belongs to the group with ID x. The group ID can be preconfigured in the UE 901 or provisioned by the AS 905. In the latter case the AS 905 can use for group provisioning either the same APN (Access Point Name) used for group communication or a different APN.

In 908, the UE 901 performs either
i. Procedure 1: A PDN Connectivity Request (to CN CP 903) with group indicator and, optionally, LLC indicator or
ii. Procedure 2: A PDN Connectivity Update (to CN CP 903) if it is already PDN connected with update of the group indicator or of the LLC indicator

In 909, if in 908 the gateway selected is different from the one already allocated to the UEs in the group, the CN CP 903 triggers a procedure (procedure 3) to relocate all other UEs in the group with ID x to the first UP-GW 902 (i.e. let all other UEs in the group be connected to and served by the first UP-GW 902) .

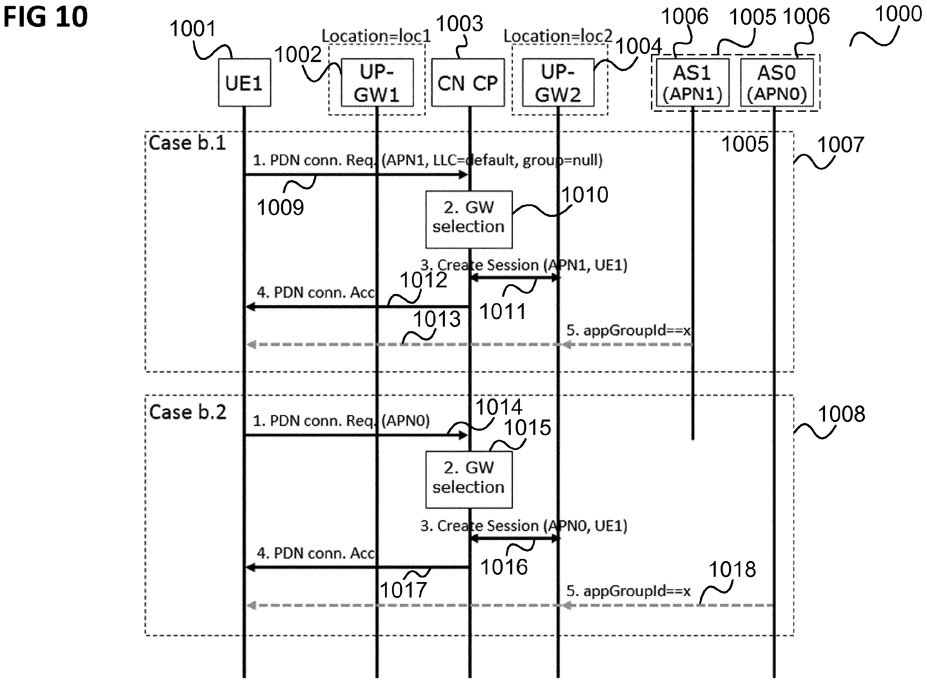

Figure 10 shows a flow diagram 1000 illustrating an example for group ID provisioning in more detail.

The message flow takes place between a UE 1001 (e.g. corresponding to one of the UEs 701), a first UP-GW 1002 (at a first location, e.g. corresponding to the first UP-GW 804), a core network control plane component 1003 of a mobile radio communication system (e.g. part of control plane 703), a second UP-GW 1004 (at a second location, e.g. corresponding to the second UP-GW 805) and an application server 1005 (e.g. corresponding to the application server 705) which may use one of two (or more) APNs 1006.

In order to run an application, the UE 1001 is made aware that it belongs to a group with ID x. The group ID can be:
a) preconfigured in the UE 1001 or
b) Provisioned by an AS 1005. In this case the AS 1005 can use for group provisioning either
   1. The same APN (APN1) used for group communication as illustrated in a first block 1007 or
   2. A different APN (APN0) as illustrated in a second block 1008.

According to option 1 of b, in 1009, the UE 1001 sends a PDN connection request specifying an APN (APN1 in this example) to the CN CP 1003.

In 1010, the CN CP 1003 performs GW selection. It is assumed that it selects the second UP-GW 1004 for the UE's group.

In 1011, the CN CP 1003 creates a session for the UE 1001 and in 1012 sends a PDN connection acknowledgement to the UE 1001.

In 1013, the application server 1005 uses the APN used for group communication (APN1) for providing the group ID to the UE 1001 (via the second UP-GW 1004).

According to option 2 of b, in 1014, the UE 1001 sends a PDN connection request specifying an APN (APN0 in this example) to the CN CP 1003.

In 1015, the CN CP 1003 performs GW selection. It is assumed that it selects the second UP-GW 1004 for the UE's group.

In 1016, the CN CP 1003 creates a session for the UE 1001 and in 1017 sends a PDN connection acknowledgement to the UE 1001.

In 1018, the application server 1005 uses a different APN (APN0) than the APN used for group communication for providing the group ID to the UE 1001 (via the second UP-GW 1004).

The UEs 701 can for example communicate the group ID or group indicator to the communication network's control plane by means of one or more NAS messages according to one of the following three approaches:
1) PDN Connectivity Request
2) PDN Connectivity Update
3) CN CP triggered gateway relocation

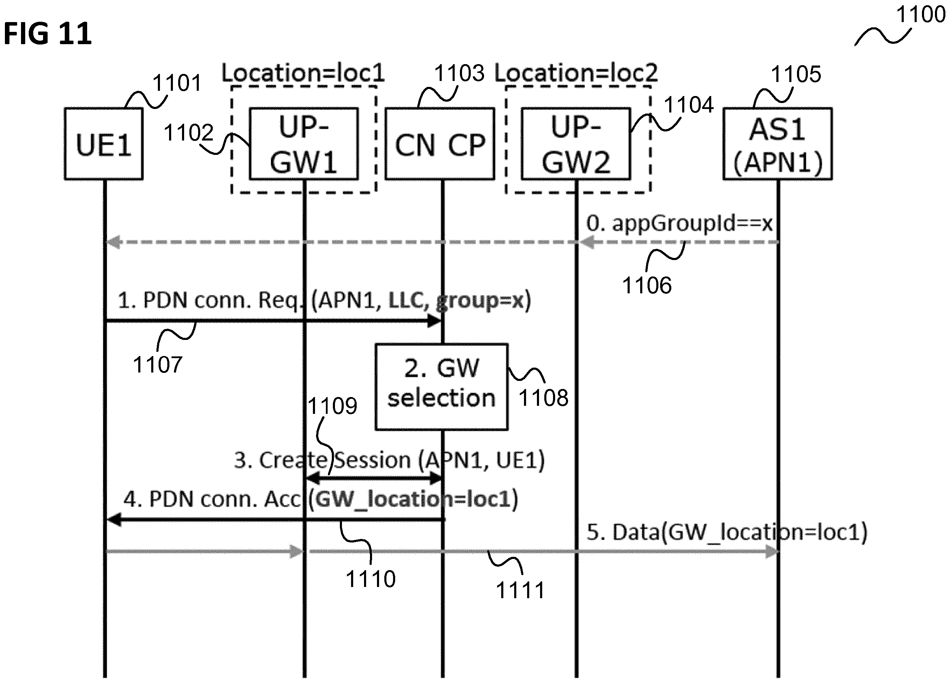

These approaches are described in the following with reference to figures 11, 12 and 13, respectively.

Figure 11 shows a flow diagram 1100 illustrating the signalling of an ID group indicator to a communication network's control plane using a PDN connectivity request.

The message flow takes place between a UE 1101 (e.g. corresponding to one of the UEs 701), a first UP-GW 1102 (at a first location, e.g. corresponding to the first UP-GW 804), a core network control plane component 1103 of a mobile radio communication system (e.g. part of control plane 703), a second UP-GW 1104 (at a second location, e.g. corresponding to the second UP-GW 805) and an application server 1105 (e.g. corresponding to the application server 705).

In 1106, the application server 1105 informs the UE 1101 about the group ID (identifier x) via the second UP-GW 1104.

In 1107, UE 1101 requests PDN connectivity to the application server's APN (APN1) including the group identifier x and, optionally, an LLC indicator. The LLC indicator can be either a true/false indicator or a threshold indicating the maximum acceptable latency for the intended service.

In 1108, the CN CP 1103 performs the UP-GW selection. It is assumed in this example that it selects the first UP-GW 1102.

In 1109, the CN CP 1103 creates the session to the selected UP-GW 1102,

In 1110, the CN CP 1103 responds to the PDN connectivity request with group identifier by indicating optionally the gateway location identifier loci of the selected UP-GW 1102.

In 1111, the UE 1101 sends data to the application server 1105. The AS 1105 can detect the new GW location implicitly via geolocation of the new IP address assigned to the UE 1101. Optionally the UE 1101 may report the gateway location identifier received in 1110 to the application server 1105.

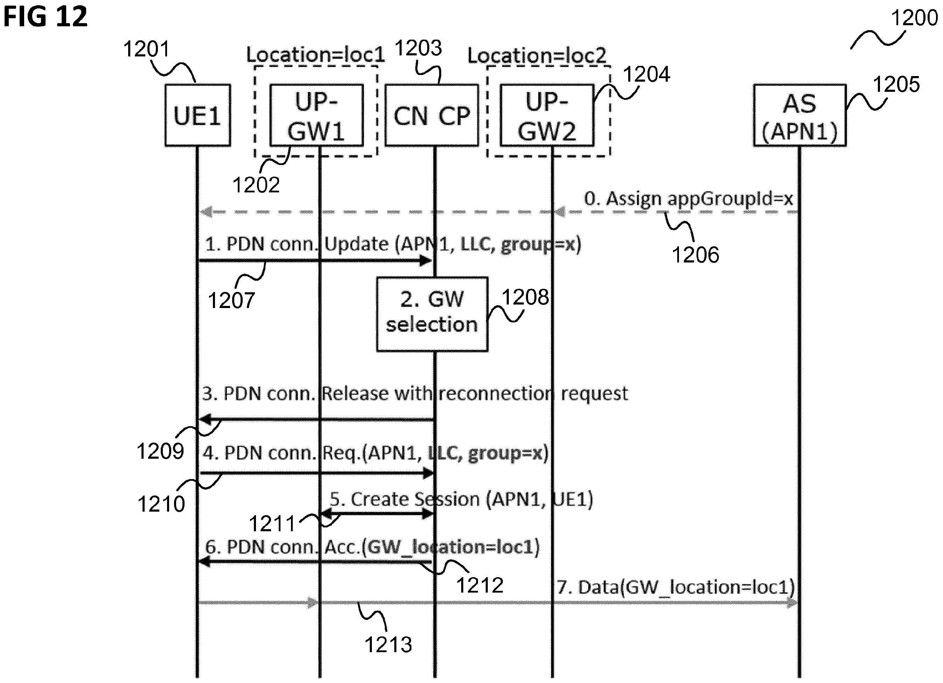

Figure 12 shows a flow diagram 1200 illustrating the signalling of an ID group indicator to a communication network's control plane using a PDN connectivity update.

The message flow takes place between a UE 1201 (e.g. corresponding to one of the UEs 701), a first UP-GW 1202 (at a first location, e.g. corresponding to the first UP-GW 804), a core network control plane component 1203 of a mobile radio communication system (e.g. part of control plane 703), a second UP-GW 1204 (at a second location, e.g. corresponding to the second UP-GW 805) and an application server 1205 (e.g. corresponding to the application server 705).

In 1206, the application server 1205 informs the UE 1201 about the assigned group ID (identifier x) via the second UP-GW 1204.

In 1207, the UE 1201 updates the PDN connectivity to the application server's APN (APN1) including the group identifier x and, optionally, an LLC indicator. The UE may request this update by means of a message introduced for this purpose (e.g. a PDN connectivity Update message) or by means of a message provided according to 3GPP specifications (e.g. a Service Request). The LLC indicator can be either a true/false indicator or a threshold indicating the maximum acceptable latency for the intended service.

In 1208, the CN-CP 1203 determines the optimal location of the UP-GW. If necessary, the CN-CP 1203 decides to relocate the UP-GW of another UE of the UE's group (i.e. re-assign an UP-GW at another location to the other UE). For example, the second UP-GW 1204 is relocated to the first UP-GW 1201 (i.e. the first UP-GW 1201 is assigned to the other UEs).

In 1209, the CN-CP 1203 informs the UE 1201 that the PDN connection needs to be re-established due to GW relocation.

In 1210, the UE 1201 requests a new PDN connection to the application server's APN (APN1), with group identifier x and, optionally, an LLC indicator.

In 1211, the CN-CP 1203 creates a session with the first UP-GW 1202.

In 1212, the CN-CP 1203 responds to the PDN connectivity request with a group identifier by indicating the gateway location identifier loci of the selected UP-GW 1202.

In 1213, the UE 1201 sends data to the application server 1205. The AS 1205 can detect the new GW location implicitly via geolocation of the new IP address assigned to the UE 1201. Optionally, the UE 1201 may report the gateway location identifier received in 1212 to the application server 1205.

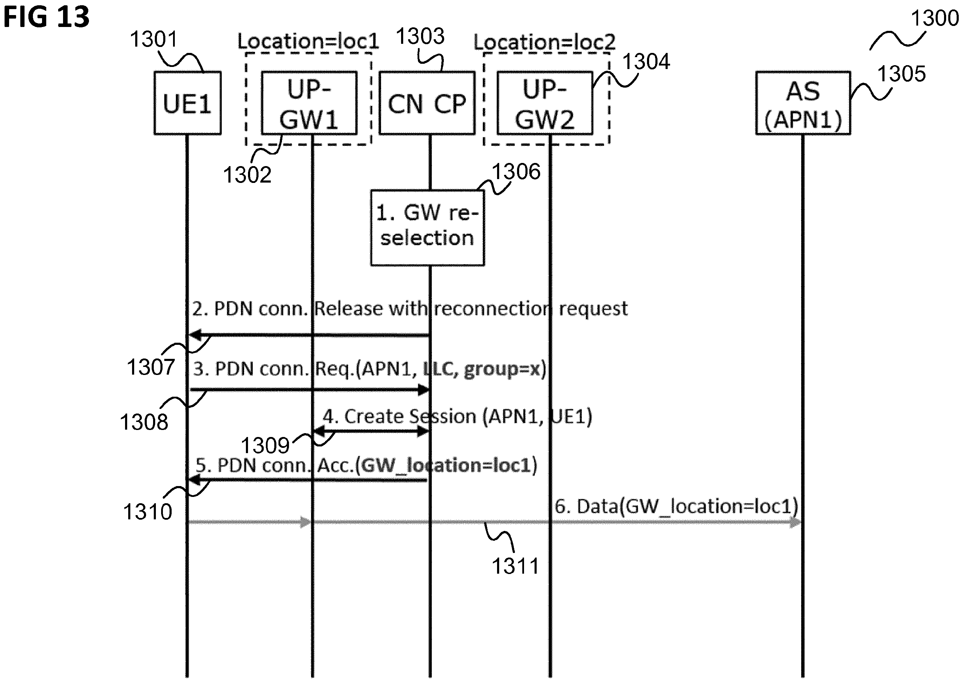

Figure 13 shows a flow diagram 1300 illustrating the signalling of an ID group indicator to a communication network's control plane using a CN CP triggered gateway relocation.

The message flow takes place between a UE 1301 (e.g. corresponding to one of the UEs 701), a first UP-GW 1302 (at a first location, e.g. corresponding to the first UP-GW 804), a core network control plane component 1303 of a mobile radio communication system (e.g. part of control plane 703), a second UP-GW 1304 (at a second location, e.g. corresponding to the second UP-GW 805) and an application server 1305 (e.g. corresponding to the application server 705).

In 1306, the CN-CP determines that the UP-GW for the UE 1301 must be relocated. In this example, it is assumed that the second UP-GW 1304 must be relocated to the first UP-GW 1302.

In 1307, the CN-CP 1303 informs the UE 1301 that the PDN connection needs to be re-established due to GW relocation.

In 1308, the UE 1301 requests a new PDN connection to the application server's APN (APN1) with group identifier x and, optionally, an LLC indicator. The group identifier can for example be a number such as '482626' or '0x3E2B638', but it is also possible to have a string, an URL-like identifier etc. (e.g. 'monkeygame.89ax77').

The LLC indicator can be either a true/false indicator or a threshold indicating the maximum acceptable latency for the intended service.

In 1309, the CN-CP 1303 creates a session to the first UP-GW 1302.

In 1310, the CN CP 1303 responds to the PDN connectivity request with a group identifier by indicating the gateway location identifier (loci) of the selected UP-GW 1302.

In 1311, the UE 1301 sends data to the application server 1305 (via APN1 or another APN) via the first UP-GW 1302. The AS 1305 can detect the new GW location implicitly via geolocation of the new IP address assigned to the UE 1301. Optionally, the UE 1301 may report the gateway location identifier received in the previous step to the application server 1305.

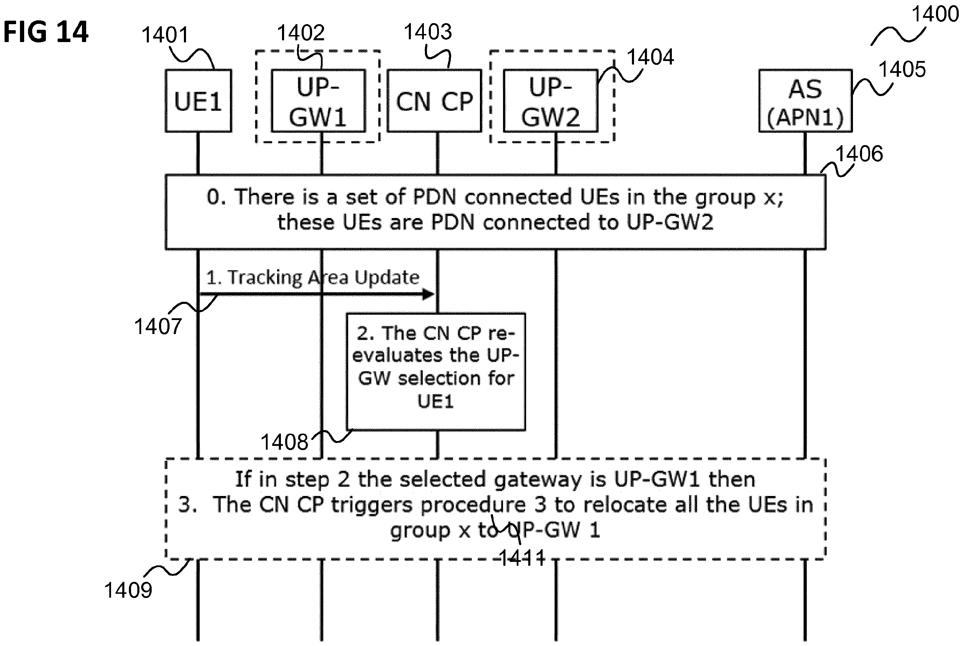

Figure 14 shows a flow diagram 1400 illustrating an example for the signalling: a UE in a group performs a Tracking Area Update and in response the CN CP performs a GW selection that may trigger a relocation of the GW.

The message flow takes place between a UE 1401 (e.g. corresponding to one of the UEs 701), a first UP-GW 1402 (at a first location, e.g. corresponding to the first UP-GW 804), a core network control plane component 1403 of a mobile radio communication system (e.g. part of control plane 703), a second UP-GW 1404 (at a second location, e.g. corresponding to the second UP-GW 805) and an application server 1405 (e.g. corresponding to the application server 705).

It is assumed that in 1406, there is a set of PDN (Packet Data Network) connected UEs in a group (with a group ID x) which are PDN connected to the second UP-GW 1404.

In 1407, the UE 1401 sends a tracking area update to the CN CP 1403.

In 1408, the CN CP 1403 re-evaluates the UP-GW selection for the UE.

In 1409, if in 1408 the CN CP 1403 selects the first UP-GW as user plane gateway then the CN CP 1403 triggers a procedure to relocate all the UEs in group x to the first UP-GW (i.e. to assign the UP-GW to the UEs in group x).

The GW re-location and the following steps may also be triggered by other mobility events, e.g. a Path Switch Request message (according to a X2-based handover according to 3GPP) or a Handover Notify message (according to an S1-based handover according to 3GPP) carrying a "Local Home Network ID" like in SIPTO@LN (Local Network).

In order to achieve seamless GW relocation during the handover, the old PDN connection may for example only be released when the new PDN connection has been established.

The PDN connectivity request/update used according to various embodiments like the examples above can be used to transmit multiple group indicators, i.e. can for example contain a list of group indicators and their associated LLC requirements (e.g. group=x, LLC=5ms; group=y, LLC=20ms; group=z, LLC=20ms).

The CN-CP 703 may then decide which of these requests can be provided by the same PDN connection and which of them need a separate UP-GW and separate PDN connection.

The CN-CP 703 may indicate this back to the UE 701 in the corresponding response message, e.g. PDN connection 1 (group=x, LLC=5ms; group=y, LLC=20ms), PDN connection 2 (group=z, LLC=20ms). The UE 701 then knows to initiate a new PDN connection for those groups that need a separate UP-GW, e.g. the group=z.

In summary, according to various embodiments, a set of mobile terminals is provided as illustrated in figure 15.

Figure 15 shows a set of mobile terminals 1500.

The set of mobile terminals 1500 comprises a first mobile terminal 1501 and a second mobile terminal 1502, each mobile terminal 1501, 1502 comprising a processor 1503 and a memory 1504.

The processor 1503 is configured to determine a group indication information at the application layer, wherein the group indication information indicates a group to which both, the first mobile terminal 1501 and the second mobile terminal 1502 (and possibly in addition one or more further mobile terminals) are assigned and to transmit the group indication information to a communication network device in a communication network (e.g. a mobile radio communication network).

According to various embodiments, in other words, an indication of a group to which a plurality of mobile terminals belong is transmitted by the mobile terminals themselves to a component of a communication network, e.g. a mobile radio communication network when they have determined the indication at an application layer, e.g. based on a reception of the indication from an application server.

The group indication being determined by mobile terminals at the application layer, e.g. at the application layer according to the Open System Interconnection (OSI) model may for example mean that:
- the mobile terminals receive the group indication from an application server
- one of the mobile terminals assigns the group indication and signals it to the other or others
- the mobile terminals agree with each other on a group indication.

For example, a group ID may be derived based on
- an application server providing a 'rendezvous function' (e.g. a mobile terminal receives from the application server a list of the IP addresses of one or more other mobile terminals in the same group or in its proximity) and the mobile terminal among themselves via the Internet select a group ID;
- an 'out of band' negotiation of the mobile terminals on the group ID, e.g. via Bluetooth, i.e. the mobile terminals are physically close, there is a pairing step, this leads to the group ID (which is then shared with the communication network).

Thus, the group indication (and for example also a gateway location indication) are exchanged via the mobile terminals. A direct interaction between the application layer and the communication network can thus be omitted, i.e. interworking requirements between the communication network and the application layer (i.e. an application layer) as well as corresponding additional functions in the core network are not necessary.

The communication network device may for example be a communication network device as described with reference to figure 16.

Figure 16 shows a communication network device 1600.

The communication network device 1600 comprises a receiver 1601 configured to receive a first group indication information from a first mobile terminal and to receive a second group indication information from a second mobile terminal, wherein the group indication information indicates a group to which both, the first mobile terminal and the second mobile terminal are assigned.

The communication network device 1600 further comprises a processor 1602 configured to perform a coordinated user plane configuration for the first mobile terminal and the second mobile terminal in response to the group indication information.

Performing a coordinated user plane configuration for the first mobile terminal and the second mobile terminal in response to the group indication information may also be understood as group connecting the first mobile terminal and the second mobile terminal in response to the group indication information.

According to various embodiments, a communication network device receives an indication of a group to which a plurality of mobile terminals belong from the mobile terminals and connects the mobile terminals as a group to the communication network, e.g. including assigning a common user plane gateway or co-located user plane gateways (i.e. user plane gateways which are close in the sense of a predetermined criterion, i.e. close in geographic terms or in latency terms, e.g. the communication latency between the co-located gateways is below a predetermined threshold). Assigning a gateway to a mobile terminal may be understood as selecting the gateway as (user plane) gateway for serving the mobile terminal in context of a communication service, i.e. receiving (user) data from the mobile terminal and forwarding them to the intended destination and receiving data intended for the mobile terminal and forwarding them to the mobile terminal. The group is for example defined by a component of the application layer, e.g. an application server.

The communication network (i.e. the communication network device) may thus for example use an indication indirectly received from an application server to implement Low Latency Communication for a group of UEs. This allows implementing the low latency communication without dedicated functions to determine the groups or implementing the group communication.

Embodiments such as the ones described above allow minimizing the interworking requirements between the core network of the communication network and the application layer since information for a communication service provided by the application layer, e.g. a group indication for implementing a Low Latency Communication is exchanged via the UE. Very low latency connectivity (e.g. 3ms end-to-end) can only be implemented by appropriate gateway selection (e.g. common or co-located gateway) for all the UEs in a group. In case of less tight low latency requirements (e.g. 20ms) also selection of gateway in different locations can be acceptable, given that the total latency budget does not exceed the maximum threshold.

Group connecting multiple mobile terminals may be understood as connecting the mobile terminals as a group which may for example include enabling group communication between the mobile terminals, e.g. while taking into account a quality requirement of the group communication such as a maximum latency of a communication between the mobile terminals via the group communication. For example, group connecting may comprise connecting the mobile terminals in a way to allow Low Latency Communication between the mobile terminals, i.e. fulfilling a certain latency requirement (e.g. a maximum latency of 3ms or 20ms of a communication between the mobile terminals).

The set of the plurality of mobile terminals 1500 for example carry out a method as illustrated in figure 17.

Figure 17 shows a flow diagram 1700 illustrating a method for providing group indication information to a communication network device.

In 1701, a first mobile terminal and a second mobile terminal of a set of mobile terminals each determine a group indication information at an application layer, wherein the group indication information indicates a group to which both, the first mobile terminal and the second mobile terminal are assigned.

In 1702, the first mobile terminal and the second mobile terminal each transmit the group indication information to a communication network device in a communication network.

The communication network device 1600 for example carries out a method for as illustrated in figure 18.

Figure 18 shows a flow diagram 1800 illustrating a method for connecting a set of mobile terminals to a communication network.

In 1801, a first group indication information is received from a first mobile terminal and a second group indication information is received from a second mobile terminal (e.g. by a component of the communication network), wherein the group indication information (i.e. each of the first group indication information and the second group indication information) indicates a group to which both, the first mobile terminal and the second mobile terminal are assigned.

In 1802, a coordinated user plane configuration for the first mobile terminal and the second mobile terminal is performed in response to the group indication information.

The components of the mobile terminals and the communication network device (e.g. the processor, the memory, the receiver etc.) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

The communication terminal or mobile terminal may comprise typical components of a mobile user device such as a display, one or more antennas etc. The functionalities provided and carried out by a mobile terminal as described above may be for example provided by means of a radio frontend, a baseband processor and/or an application processor, e.g. depending on the communication layer of the respective functionalities.

The mobile radio network communication device may for example be implemented by means of a server computer which is connected to a radio access network of the mobile radio network by a radio or landline communication network.

While specific aspects have been described, it should be understood by those skilled in the art that various changes in form and detail may be made therein without departing from the aspects of this disclosure as defined by the appended claims. The scope is thus indicated by the appended claims.

## Claims

1. A method for providing group indication information to a communication network device (1600), which is a component of a core network of the communication network (100), comprising:
a first mobile terminal (301) and a second mobile (304) terminal of a set of mobile terminals each determining a group indication information at the application layer, wherein the group indication information indicates a group to which both, the first mobile terminal and the second mobile terminal are assigned; and
the first mobile terminal and the second mobile terminal each transmitting the group indication information to the communication network device in a communication network;
signalling to the communication network device (1600) that the group is a group for a communication service having a low latency requirement by means of sending a low latency connectivity indicator to the communication network device;
receiving the group indication information from the first mobile terminal and receiving the group indication information from the second mobile terminal; and
performing a coordinated user plane configuration for the first mobile terminal and the second mobile terminal in response to the group indication information comprising selecting a common user plane gateway or two co-located user plane gateways or user plane gateways in different locations but connected via a low latency backbone for group connecting the first mobile terminal and the second mobile terminal.

2. The method according to claim 1, wherein the low latency connectivity indicator is a true/false indicator or indicates a maximum acceptable latency.

3. The method according to claim 1 or 2, comprising transmitting the group indication information by means of a control plane message, wherein the control plane message is a non-access stratum message.

4. The method according to any one of claims 1 to 3, comprising transmitting the group indication information by means of a connection request message or a connection update request message.

5. The method according to any one of claims 1 to 4, wherein said determining of a group indication information at the application layer is performed either by receiving the same group indication information in both terminals from a third entity like an application server or by negotiating a group indication information by an application layer interaction between said first and second terminal.

6. A method for connecting a set of mobile terminals to a communication network device, which is a component of a core network of the communication network, comprising the communication network device receiving a first group indication information from a first mobile terminal and receiving a second group indication information from a second mobile terminal, wherein said first and second group indication information indicate a group to which both, the first mobile terminal and the second mobile terminal are assigned;
the communication network device performing a coordinated user plane configuration for the first mobile terminal and the second mobile terminal in response to the group indication information;
selecting a common user plane gateway or two co-located user plane gateways or user plane gateways in different locations but connected via a low latency backbone for group connecting the first mobile terminal and the second mobile terminal depending on a reception of a signalling that the group is a group for a communication service having a low latency requirement.

7. The method according to claim 6, comprising selecting at least one user plane gateway in response to the group indication information for group connecting the first mobile terminal and the second mobile terminal.

8. The method according to any one of claims 6 or 7, comprising selecting, based on the group indication information, a common user plane gateway or two co-located user plane gateways or user plane gateways in different locations but connected via a low latency backbone for group connecting the first mobile terminal and the second mobile terminal.

9. The method according to any one of claims 6 to 8, comprising selecting a user plane gateway for group connecting the first mobile terminal and the second mobile terminal and maintaining an association of the group indication information with information about the user plane gateway.

10. The method according to any one of claims 6 to 9, comprising selecting a user plane gateway for group connecting the first mobile terminal and the second mobile terminal and transmitting information about the user plane gateway to the first mobile terminal and to the second mobile terminal.

11. A set of mobile terminals, comprising:
a first mobile terminal and a second mobile terminal, each mobile terminal comprising:
a processor and a memory, the processor configured to determine a group indication information at the application layer, wherein the group indication information indicates a group to which both, the first mobile terminal and the second mobile terminal are assigned; and
transmit the group indication information to a communication network device, which is a component of a core network of the communication network;
signalling to the communication network device (1600) that the group is a group for a communication service having a low latency requirement by means of sending a low latency connectivity indicator to the communication network device;
receiving the group indication information from the first mobile terminal and receiving the group indication information from the second mobile terminal; and
performing a coordinated user plane configuration for the first mobile terminal and the second mobile terminal in response to the group indication information comprising selecting a common user plane gateway or two co-located user plane gateways or user plane gateways in different locations but connected via a low latency backbone for group connecting the first mobile terminal and the second mobile terminal.

12. A communication network device, which is a component of a core network of the communication network, comprising:
a receiver configured to receive a first group indication information from a first mobile terminal and to receive a second group indication information from a second mobile terminal, wherein the group indication information indicates a group to which both, the first mobile terminal and the second mobile terminal are assigned; and
a processor configured to perform a coordinated user plane configuration for the first mobile terminal and the second mobile terminal in response to the group indication information;
selecting a common user plane gateway or two co-located user plane gateways or user plane gateways in different locations but connected via a low latency backbone for group connecting the first mobile terminal and the second mobile terminal depending on a reception of a signalling that the group is a group for a communication service having a low latency requirement.

## Patentansprüche

1. Verfahren zum Bereitstellen von Gruppenanzeigeinformation an eine Kommunikationsnetz-Vorrichtung (1600), welche eine Komponente eines Kernnetzes des Kommunikationsnetzes (100) ist, wobei das Verfahren aufweist:
ein erstes mobiles Terminal (301) und ein zweites mobiles Terminal (304) eines Satzes von mobilen Terminals, wobei jedes mobile Terminal eine Gruppenanzeigeinformation auf der Anwendungsebene definiert, wobei die Gruppenanzeigeinformation eine Gruppe anzeigt, zu welcher sowohl das erste mobile Terminal als auch das zweite mobile Terminal zugeordnet ist; und
dass sowohl das erste mobile Terminal als auch das zweite mobile Terminal die Gruppenanzeigeinformation an die Kommunikationsnetz-Vorrichtung in einem Kommunikationsnetz übermittelt;
Signalisieren an die Kommunikationsnetz-Vorrichtung (1600), dass die Gruppe eine Gruppe für einen Kommunikationsdienst aufweisend eine Niedriglatenz-Anforderung ist mittels Sendens eines Niedriglatenz-Konnektivitätsindikators an die Kommunikationsnetz-Vorrichtung;
Empfangen der Gruppenanzeigeinformation von dem ersten mobilen Terminal und Empfangen der Gruppenanzeigeinformation von dem zweiten mobilen Terminal; und
Durchführen einer koordinierten Benutzerebenen-Konfiguration für das erste mobile Terminal und das zweite mobile Terminal als Reaktion auf die Gruppenanzeigeinformation aufweisend das Auswählen eines gemeinsamen Benutzerebenen-Gateways oder zweier co-lokalisierter Benutzerebenen-Gateways oder von Benutzerebenen-Gateways an verschiedenen Orten, welche aber über einen Niedriglatenz-Backbone verbunden sind, für die Gruppenverbindung des ersten mobilen Terminals und des zweiten mobilen Terminals.

2. Verfahren gemäß Anspruch 1,
wobei der Niedriglatenz-Konnektivitätsindikator ein wahr/falsch-Indikator ist oder eine maximal akzeptable Latenz anzeigt.

3. Verfahren gemäß Anspruch 1 oder 2, aufweisend:
Übermitteln der Gruppenanzeigeinformation mittels einer Steuerebenen-Nachricht, wobei die Steuerebenen-Nachricht eine nicht-Zugangsschicht-Nachricht ist.

4. Verfahren gemäß einem der Ansprüche 1 bis 3, aufweisend:
Übermitteln der Gruppenanzeigeinformation mittels einer Verbindungsanforderungsnachricht oder einer Verbindungsaktualisierungsanforderungsnachricht.

5. Verfahren gemäß einem der Ansprüche 1 bis 4,
wobei das Definieren einer Gruppenanzeigeinformation auf der Anwendungsebene entweder mittels Empfangens derselben Gruppenanzeigeinformation in beiden Terminals aus einer dritten Einheit wie einem Anwendungsserver oder mittels Aushandelns einer Gruppenanzeigeinformation durch eine Interaktion auf Anwendungsebene zwischen dem ersten und dem zweiten Terminal durchgeführt wird.

6. Verfahren zum Verbinden eines Satzes von mobilen Terminals zu einer Kommunikationsnetz-Vorrichtung, welche eine Komponente eines Kernnetzes des Kommunikationsnetzes ist, wobei das Verfahren aufweist:
dass die Kommunikationsnetz-Vorrichtung eine erste Gruppenanzeigeinformation von einem ersten mobilen Terminal empfängt und eine zweite Gruppenanzeigeinformation von einem zweiten mobilen Terminal empfängt, wobei die erste und die zweite Gruppenanzeigeinformationen eine Gruppe anzeigen, zu welcher sowohl das erste mobile Terminal als auch das zweite mobile Terminal zugeordnet ist;
dass die Kommunikationsnetz-Vorrichtung eine koordinierte Benutzerebenen-Konfiguration für das erste mobile Terminal und das zweite mobile Terminal als Reaktion auf die Gruppenanzeigeinformation durchführt;
Auswählen eines gemeinsamen Benutzerebenen-Gateways oder zweier co-lokalisierter Benutzerebenen-Gateways oder von Benutzerebenen-Gateways an verschiedenen Orten, welche aber über einen Niedriglatenz-Backbone verbunden sind, für die Gruppenverbindung des ersten mobilen Terminals und des zweiten mobilen Terminals in Abhängigkeit von einem Empfang einer Signalisierung, dass die Gruppe eine Gruppe für einen Kommunikationsdienst aufweisend eine Niedriglatenz-Anforderung ist.

7. Verfahren gemäß Anspruch 6, aufweisend:
Auswählen mindestens eines Benutzerebenen-Gateways als Reaktion auf die Gruppenanzeigeinformation für die Gruppenverbindung des ersten mobilen Terminals und des zweiten mobilen Terminals.

8. Verfahren gemäß einem der Ansprüche 6 oder 7, aufweisend:
Auswählen, basierend auf der Gruppenanzeigeinformation, eines gemeinsamen Benutzerebenen-Gateways oder zweier co-lokalisierter Benutzerebenen-Gateways oder von Benutzerebenen-Gateways an verschiedenen Orten, welche aber über einen Niedriglatenz-Backbone verbunden sind, für die Gruppenverbindung des ersten mobilen Terminals und des zweiten mobilen Terminals.

9. Verfahren gemäß einem der Ansprüche 6 bis 8, aufweisend:
Auswählen eines Benutzerebenen-Gateways für die Gruppenverbindung des ersten mobilen Terminals und des zweiten mobilen Terminals und Aufrechterhalten einer Zuordnung der Gruppenanzeigeinformation mit Informationen über das Benutzerebenen-Gateways.

10. Verfahren gemäß einem der Ansprüche 6 bis 9, aufweisend:
Auswählen eines Benutzerebenen-Gateways für die Gruppenverbindung des ersten mobilen Terminals und des zweiten mobilen Terminals und Übermitteln von Informationen über das Benutzerebenen-Gateways an das erste mobile Terminal und an das zweite mobile Terminal.

11. Satz von mobilen Terminals, aufweisend:
ein erstes mobiles Terminal und ein zweites mobiles Terminal, wobei jedes mobile Terminal aufweist:
einen Prozessor und einen Speicher, wobei der Prozessor eingerichtet ist:
zum Definieren einer Gruppenanzeigeinformation auf der Anwendungsebene, wobei die Gruppenanzeigeinformation eine Gruppe anzeigt, zu welcher sowohl das erste mobile Terminal als auch das zweite mobile Terminal zugeordnet ist; und
zum Übermitteln der Gruppenanzeigeinformation an eine Kommunikationsnetz-Vorrichtung, welche eine Komponente eines Kernnetzes des Kommunikationsnetzes ist;
Signalisieren an die Kommunikationsnetz-Vorrichtung (1600), dass die Gruppe eine Gruppe für einen Kommunikationsdienst aufweisend eine Niedriglatenz-Anforderung ist, mittels Sendens eines Niedriglatenz-Konnektivitätsindikators an die Kommunikationsnetz-Vorrichtung;
Empfangen der Gruppenanzeigeinformation von dem ersten mobilen Terminal und zum Empfangen der Gruppenanzeigeinformation von dem zweiten mobilen Terminal; und
Durchführen einer koordinierten Benutzerebenen-Konfiguration für das erste mobile Terminal und das zweite mobile Terminal als Reaktion auf die Gruppenanzeigeinformation aufweisend das Auswählen eines gemeinsamen Benutzerebenen-Gateways oder zweier co-lokalisierter Benutzerebenen-Gateways oder von Benutzerebenen-Gateways an verschiedenen Orten, welche aber über einen Niedriglatenz-Backbone verbunden sind, für die Gruppenverbindung des ersten mobilen Terminals und des zweiten mobilen Terminals.

12. Kommunikationsnetz-Vorrichtung, welche eine Komponente eines Kernnetzes des Kommunikationsnetzes ist, aufweisend:
einen Empfänger, welcher eingerichtet ist zum Empfangen einer ersten Gruppenanzeigeinformation von einem ersten mobilen Terminal und zum Empfangen einer zweiten Gruppenanzeigeinformation von einem zweiten mobilen Terminal, wobei die Gruppenanzeigeinformation eine Gruppe anzeigt, zu welcher sowohl das erste mobile Terminal als auch das zweite mobile Terminal zugeordnet ist; und
einen Prozessor, welcher eingerichtet ist zum Durchführen einer koordinierten Benutzerebenen-Konfiguration für das erste mobile Terminal und das zweite mobile Terminal als Reaktion auf die Gruppenanzeigeinformation;
Auswählen eines gemeinsamen Benutzerebenen-Gateways oder zweier co-lokalisierter Benutzerebenen-Gateways oder von Benutzerebenen-Gateways an verschiedenen Orten, welche aber über einen Niedriglatenz-Backbone verbunden sind, für die Gruppenverbindung des ersten mobilen Terminals und des zweiten mobilen Terminals in Abhängigkeit von einem Empfang einer Signalisierung, dass die Gruppe eine Gruppe für einen Kommunikationsdienst aufweisend eine Niedriglatenz-Anforderung ist.

## Revendications

1. Procédé permettant de fournir une information d'indication de groupe à un dispositif de réseau de communication (1600) qui est un composant d'un réseau central du réseau de communication (100), comprenant :
un premier terminal mobile (301) et un deuxième terminal mobile (304) d'un ensemble de terminaux mobiles, chacun déterminant une information d'indication de groupe au niveau de la couche d'application, dans lequel l'information d'indication de groupe indique un groupe auquel le premier terminal mobile et le deuxième terminal mobile sont assignés ; et
le premier terminal mobile et le deuxième terminal mobile transmettant chacun l'information d'indication de groupe au dispositif de réseau de communication dans un réseau de communication ;
le signalement au dispositif de réseau de communication (1600) que le groupe est un groupe pour un service de communication ayant une exigence de faible latence grâce à l'envoi d'un indicateur de connectivité à faible latence au dispositif de réseau de communication ;
la réception de l'information d'indication de groupe en provenance du premier terminal mobile et la réception de l'information d'indication de groupe en provenance du deuxième terminal mobile ; et
la réalisation d'une configuration de plan d'utilisateur coordonné pour le premier terminal mobile et le deuxième terminal mobile en réponse à l'information d'indication de groupe comprenant la sélection d'une passerelle de plan d'utilisateur commune ou de deux passerelles de plans d'utilisateur co-localisées ou de passerelles de plans d'utilisateur à différents endroits mais connectées par l'intermédiaire d'une ossature à faible latence pour la connexion au groupe du premier terminal mobile et du deuxième terminal mobile.

2. Procédé selon la revendication 1, dans lequel l'indicateur de connectivité à faible latence est un indicateur vrai/faux ou indique une latence maximum acceptable.

3. Procédé selon la revendication 1 ou 2, comprenant la transmission de l'information d'indication de groupe au moyen d'un message de plan de contrôle, dans lequel le message de plan de contrôle est un message de strate de non-accès.

4. Procédé selon l'une des revendications 1 à 3, comprenant la transmission de l'information d'indication de groupe au moyen d'un message de demande de connexion ou d'un message de demande de mise à jour de connexion.

5. Procédé selon l'une des revendications 1 à 4, dans lequel ladite détermination d'une information d'indication de groupe au niveau de la couche d'application est effectuée soit par
la réception de la même information d'indication de groupe dans les deux terminaux en provenance d'une troisième entité comme un serveur d'application soit par
la négociation d'une information d'indication de groupe par une interaction de la couche d'application entre lesdits premier et deuxième terminaux.

6. Procédé de connexion d'un ensemble de terminaux mobiles à un dispositif de réseau de communication qui est un composant du réseau de communication, comprenant
la réception, par le dispositif de réseau de communication, d'une première information d'indication de groupe en provenance d'un premier terminal mobile et la réception d'une deuxième information d'indication de groupe en provenance d'un deuxième terminal mobile, dans lequel lesdites première et deuxième informations d'indication de groupe indiquent un groupe auquel le premier terminal mobile et le deuxième terminal mobile sont assignés ;
la réalisation, par le dispositif de réseau de communication, d'une configuration de plan d'utilisateur coordonné pour le premier terminal mobile et le deuxième terminal mobile en réponse à l'information d'indication de groupe ;
la sélection d'une passerelle de plan d'utilisateur ou de deux passerelles de plans d'utilisateurs co-localisées ou de passerelles de plans d'utilisateurs à différents endroits mais connectées par l'intermédiaire d'une ossature à faible latence pour la connexion au groupe du premier terminal mobile et du deuxième terminal mobile en fonction d'une réception d'un signalement que le groupe est un groupe pour un service de communication ayant une exigence de faible latence.

7. Procédé selon la revendication 6, comprenant la sélection d'au moins une passerelle de plan d'utilisateur en réponse à l'information d'indication de groupe pour la connexion au groupe du premier terminal mobile et du deuxième terminal mobile.

8. Procédé selon l'une des revendications 6 ou 7, comprenant la sélection, sur la base de l'information d'indication de groupe, d'une passerelle de plan d'utilisateur commune ou de deux passerelles de plans d'utilisateurs co-localisées ou de passerelles de plans d'utilisateurs à différents endroits mais connectées par l'intermédiaire d'une ossature à faible latence pour la connexion au groupe du premier terminal mobile et du deuxième terminal mobile.

9. Procédé selon l'une des revendications 6 à 8, comprenant la sélection d'une passerelle de plan d'utilisateur pour la connexion au groupe du premier terminal mobile et du deuxième terminal mobile et le maintien d'une association de l'information d'indication de groupe avec une information concernant la passerelle de plan d'utilisateur.

10. Procédé selon l'une des revendications 6 à 9, comprenant la sélection d'une passerelle de plan d'utilisateur pour la connexion au groupe du premier terminal mobile et du deuxième terminal mobile et la transmission d'une information concernant la passerelle de plan d'utilisateur au premier terminal mobile et au deuxième terminal mobile.

11. Ensemble de terminaux mobiles comprenant :
un premier terminal mobile et un deuxième terminal mobile, chaque terminal mobile comprenant :
un processeur et une mémoire, le processeur étant conçu pour déterminer une information d'indication de groupe au niveau de la couche d'application, dans lequel l'information d'indication de groupe indique un groupe auquel le premier terminal mobile et le deuxième terminal mobile sont assignés ; et
la transmission de l'information d'indication de groupe à un dispositif de réseau de communication, qui est un composant d'un réseau central du réseau de communication ;
le signalement au dispositif de réseau de communication (1600) que le groupe est un groupe pour un service de communication ayant une exigence de faible latence grâce à l'envoi d'un indicateur de connectivité à faible latence au dispositif de réseau de communication ;
la réception de l'information d'indication de groupe en provenance du premier terminal mobile et la réception de l'information d'indication de groupe en provenance du deuxième terminal mobile ; et
la réalisation d'une configuration de plan d'utilisateur coordonné pour le premier terminal mobile et le deuxième terminal mobile en réponse à l'information d'indication de groupe comprenant la sélection d'une passerelle de plan d'utilisateur commune ou de deux passerelles de plans d'utilisateurs co-localisées ou de passerelles de plans d'utilisateurs à différents endroits mais connectées par l'intermédiaire d'une ossature à faible latence pour la connexion au groupe du premier terminal mobile et du deuxième terminal mobile.

12. Dispositif de réseau de communication, qui est un composant d'un réseau central du réseau de communication, comprenant :
un récepteur conçu pour recevoir une première information d'indication de groupe en provenance d'un premier terminal mobile et pour recevoir une deuxième information d'indication de groupe en provenance d'un deuxième terminal mobile, dans lequel l'information d'indication de groupe indique un groupe auquel le premier terminal mobile et le deuxième terminal mobile sont assignés ; et
un processeur conçu pour réaliser une configuration de plan d'utilisateur coordonnée pour le premier terminal mobile et le deuxième terminal mobile en réponse à l'information d'indication de groupe ;
la sélection d'une passerelle de plan d'utilisateur commune ou de deux passerelles de plans d'utilisateurs co-localisées ou de passerelles de plans d'utilisateurs à différents endroits mais connectées par l'intermédiaire d'une ossature à faible latence pour la connexion au groupe du premier terminal mobile et du deuxième terminal mobile, en fonction d'une réception d'un signalement que le groupe est un groupe pour un service de communication ayant une exigence de faible latence.
